# EUROPÄISCHE PATENTANMELDUNG

(11) **EP 0 958 881 A1**
(43) Veröffentlichungstag der Anmeldung: **24.11.1999**
(21) Anmeldenummer: 99109811.2
(22) Anmeldetag: 19.05.1999
(51) Int. Cl.: B23K 26/00

(54) **Lasermarkierungs- oder Beschriftungseinrichtung**

(30) Priorität: 19.05.1998 DE 19822323
(71) Anmelder: Dengler, Stefan, 75365 Calw-Stammheim (DE)
(72) Erfinder: Dengler, Stefan, 75365 Calw-Stammheim (DE)
(74) Vertreter: Patentanwälte Rüger, Barthelt & Abel

(57) **Zusammenfassung**

Eine Lasergraviereinrichtung weist eine Bildaufnahmeeinrichtung (11) auf, die ein Teilbild des mit einer Gravur zu versehenden Gegenstandes (4) auf einem Monitor (31) zur Anzeige bringt. Dem Monitorbild wird ein Anzeigefeld überlagert, in dem die auf dem Gegenstand (4) aufzubringende graphische Darstellung anzeigt wird. Das Anzeigefeld ist frei positionierbar und stellt das Schriftfeld dar, das von einer entsprechenden Lasereinheit (12) beschrieben wird, falls diese freigegeben wird. Zur Steuerung dienen Eingabemittel (28). Die Lasergraviereinrichtung ermöglicht ein schnelles und fehlersicheres Beschriften oder Markieren unterschiedlicher Gegenstände in Folge.

## Beschreibung

Die Erfindung betrifft eine Einrichtung zum Laserbeschriften oder Markieren von Gegenständen, insbesondere mit Gummioberflächen, wie bspw. Reifen.

Insbesondere bei oder nach der Runderneuerung von Reifen ist es häufig zu wünschen, diese mit einer Beschriftung, einer Markierung, einem Logo oder sonstigen Zeichen zu versehen. Aber auch aus anderen Gründen kann eine Markierung oder Beschriftung erforderlich sein. Bspw. kann es bei Reifen, die strengen Wartungsauflagen unterliegen, wie bspw. bei Flugzeugreifen, erforderlich sein, die durchgeführte Wartung, eine Auswuchtung, eine Runderneuerung oder sonstige Maßnahmen und Daten, wie bspw. ausführende Werkstätte, ausführende Person, Datum und dergleichen auf dem Reifen zu vermerken. Ein ähnliches Erfordernis kann sich bei Reifentests bei der Entwicklung von Reifen ergeben. Auch hier kann es erforderlich sein, auf Prototypreifen Informationen anzubringen.

Prinzipiell ist es möglich, Reifen bei der Herstellung mit einer Beschriftung zu versehen, die bspw. die Reifengröße, die Bauart, den Typ oder dgl. wiedergibt. Die Beschriftungen sind meist durch erhabene Gummibereiche gebildet. Zur Ausbildung der Beschriftung sind die Reifenformen mit entsprechenden Negativformen der Schrift versehen.

Derartige Negativformen führen zu einer festen Beschriften für alle mit der Form hergestellten Reifen. Sollen jedoch Individualinformationen an dem Reifen angebracht werden, ergeben sich Schwierigkeiten. Dies gilt insbesondere auch für Beschriftungen, die nachträglich, d.h. nach der Herstellung oder nach dem Vulkanisieren von Reifen an diesen angebracht werden sollen.

Die auf einem Reifen zur Beschriftung zur Verfügung stehende Fläche ist beschränkt. Keinesfalls können Markierungen, Logos oder sonstiges in Bereichen angeordnet werden, in denen bereits andere Markierungen, Muster, Profile oder dgl. vorhanden sind. Dies gilt sowohl für Reifen als auch für andere nachträglich zu beschriftende Gegenstände.

Davon ausgehend ist es Aufgabe der Erfindung eine Einrichtung zu schaffen, mit der Gegenstände, insbesondere aus Gummi bestehende Gegenstände beschriftbar oder mit sonstigen grafischen Darstellungen oder Markierungen zu versehen sind.

Diese Aufgabe wird durch die Lasergraviereinrichtung mit den Merkmalen des Patentanspruchs 1 gelöst.

Die erfindungsgemäße Lasergraviereinrichtung bringt die gewünschte Markierung, Beschriftung, Zeichen oder Logos als Lasergravur an dem zu beschriftenden Gegenstand, bspw. dem zu beschriftenden Reifen an. Dazu dient eine Lasereinheit, die unter der Steuerung einer bspw. auf einem Mikrorechner basierenden Verarbeitungseinheit einen Laserstrahl geeigneter Leitung und Wellenlänge so über die Oberfläche, bspw. die Gummioberfläche, führt, dass dauerhafte Spuren auf der Oberfläche entstehen. Die Verarbeitungseinrichtung ist mit einer Bildaufnahmeeeinheit und einer Anzeigeeinrichtung verbunden, wobei die Bildaufnahmeeinheit den zu beschriftenden Gegenstand beobachtet bzw. aufnimmt. Das aufgenommene Bild wird auf der Anzeigeeinrichtung dargestellt. Die Anzeigeeinrichtung, bspw. eine Bildwiedergabeeinrichtung, d.h. ein Monitor oder dgl. gibt den zu beschriftenden Gegenstand in Gesamtansicht oder in einer ausschnittsweisen Ansicht wieder. Bspw. wird genau der Teil des Gegenstands angezeigt, der in dem Sichtfeld der Bildaufnahmeeinheit liegt.

Zur Plazierung der Beschriftung blendet die Verarbeitungseinrichtung in das auf der Anzeigeeinrichtung angezeigte Bild die zum Anbringen an dem Gegenstand vorgesehene Beschriftung, Markierung oder sonstige Information ein. Dies erfolgt in einem gesonderten Feld, das durch entsprechende Eingabe- oder Bedienmittel auf der Anzeigeeinrichtung positionierbar ist. Die jeweils aktuelle Position dieses Feld auf dem Bild des Gegenstand, das die Anzeigeeinrichtung anzeigt, entspricht dabei der Position, in der die Lasereinheit den Reifen oder sonstigen Gegenstand beschriften würde, wenn der Beschriftungs- oder Graviervorgang in diesem Moment ausgelöst würde. Es wird für den Bediener dadurch möglich, die Beschriftung oder Markierung an einer geeigneten Stelle des Gegenstand anzubringen. Insbesondere bei Reifen, die mehrere Markierungen, Beschriftungen, Zeichen und dgl. tragen, wird es dadurch möglich, eine geeignete Stelle auszusuchen, an der keine Überschneidungen zu sonstigen Markierungen besteht. Dies vermeidet Fehlbeschriftungen oder unleserliche Markierungen die den Gegenstand letztlich zu Ausschuss machen würden.

Außerdem ist es mit dieser Lasergraviereinrichtung möglich, nacheinander Gegenstände unterschiedlichen Typs, bspw. Reifen unterschiedlicher Baugröße zu beschriften oder sonstige graphische Information an ihnen anzubringen. Die Anpassung der Beschriftungsposition an unterschiedliche Reifengrößen kann vom Monitor aus von einem Bediener zügig vorgenommen werden. Durch das erfindungsgemäße Konzept wird eine besonders klare und einfach zu bedienende Bedienoberfläche erzielt.

Besonders einfach wird die Bedienung, wenn das Anzeigefeld mit der aufzubringenden Gravur wenigstens einen durchsichtigen Hintergrund aufweist. Dies gestattet auf besonders effektive Weise, ob in dem vorgesehenen Beschriftungsfeld bereits andere Markierungen oder Zeichen vorhanden sind. Bedarfsweise kann zur Darstellung des Anzeigefelds dieses durch geänderte Farbwerte, geänderte Kontrastwerte oder geänderte Helligkeit veranschaulicht werden. Es ist auch möglich, es zur Markierung mit einem Rand zu versehen und als Hintergrund das unveränderte Originalbild des Gegenstands zu verwenden. Die aufzugravierende graphische Information kann undurchsichtig, farbig oder schwarz oder auch durchsichtig mit gegenüber dem Bildhintergrund geänderten Farbwerten, Kontrastwerten oder dgl. veranschaulicht werden.

Mit der Verarbeitungseinheit ist vorzugsweise eine Eingabeeinrichtung wie bspw. eine Tastatur, eine Mouse, ein Joystick, ein Trackball, ein Touchpad oder eine ähnliche Einrichtung verbunden, die eine Beeinflussung des Anzeigefelds gestattet. Bedarfsweise kann auch ein Touchscreen zur Eingabe verwendet werden.

In jedem Fall ist es zweckmäßig, wenn das von der Bildaufnahmeeinrichtung aufgenommene Bild und das die vorgesehene Gravur wiedergebende Anzeigefeld in Bezug aufeinander bewegbar sind. Dazu ist es sowohl möglich das Anzeigefeld gegen das ansonsten stehende Bild des Gegenstands, als auch das Bild des Gegenstands gegen das ruhende Anzeigefeld zu verschieben. Um die Anpassung möglichst komfortabel zu ermöglichen, kann es zweckmäßig sein, das Anzeigefeld in seiner Größe veränderbar zu gestalten. Außerdem kann es von Vorteil sein, das von der Bildaufnahmeeinrichtung wiedergegebene Bild vergrößern und verkleinern zu können. Schliesslich ist neben einer Verschiebung des Bilds des Gegenstands zu des Anzeigefelds gegeneinander auch die Möglichkeit einer Relativdrehung, einer Vergrößerung und einer Verkleinerung von Vorteil.

Die Bediensicherheit wird erhöht, wenn das von der Anzeigeeinrichtung wiedergegebene Bild des zu beschriftenden Gegenstands ein Livebild ist. Dies bedeutet, dass eine Verlagerung des Gegenstands, eine Drehung desselben, eine Verschiebung usw. sofort von der Anzeigeeinrichtung wiedergegeben wird, indem diese praktisch zeitgleich jeweils immer den im Gesichtsfeld der Bildaufnahmeeinrichtung befindlichen Teil des Gegenstands anzeigt. Eine Positionierung der aufzubringenden graphischen Information kann deshalb auch durch entsprechende Positionierung des zu beschriftenden oder zu gravierenden Gegenstands erfolgen. Die Verarbeitungseinrichtung stellt dabei bei vorteilhaften Ausführungsformen sicher, dass die auf der Monitoreinrichtung dargestellte Beschriftung, die praktisch in das Bild des Gegenstand eingeblendet worden ist, mit der Beschriftung oder Markierung übereinstimmt, die von der Lasereinheit an dem Gegenstand angebracht wird. Der Bediener kann sich deshalb, wenn er das Anzeigefeld auf einen freien Bereich des Gegenstands plaziert hat, darauf verlassen, dass die in dem Anzeigefeld vorhandene graphische Information später nicht mit Markierungen interferiert, die außerhalb des Anzeigefelds lagen. Dies wird erreicht, indem die Änderung der Größe und Position des Anzeigefelds unmittelbar in eine Veränderung der Größe und Position des Beschriftungsfelds umgesetzt wird, das von der Lasereinheit beschrieben wird.

Gemäß einer ersten Ausführungsform ist es möglich, den Gegenstand, die Laserheit und die Bildaufnahmeeinrichtung ortsfest zueinander zu positionieren. Das Gesichtsfeld der Bildaufnahmeeinrichtung und der mögliche Schreibbereich der Lasereinheit sind dabei so groß bemessen, dass alle möglichen Beschriftungsfeldpositionen innerhalb des Gesichtsfelds und des Schreibbereichs liegen. Alternativ kann es vorteilhaft sein, ein oder mehrere Positioniereinrichtungen vorzusehen, die den Gegenstand und die Bildaufnahmeeinrichtung bzw. die Lasereinheit gegeneinander bewegen bzw. verstellen können. Dies gestattet eine bessere Ausnutzung der Auflösung der Bildaufnahmeeinrichtung bzw. der Lasereinheit. Insbesondere wenn die zu beschriftenden Gegenstände Reifen sind, kann es vorteilhaft sein, eine Aufnahmeeinrichtung vorzusehen, mit der der Reifen von Hand oder von der Verarbeitungseinrichtung gesteuert drehbar ist. Dies gestattet es, die gesamte Seitenwand des Reifens nach geeigneten Beschriftungsbereichen abzusuchen.

Es ist vorteilhaft wenn die Verarbeitungseinheit eine Interface zur Verbindung mit weiteren Anlagen oder Einrichtung aufweist. Dadurch wird es möglich, die Lasergraviereinrichtung mit Informationen zu versorgen, die sich auf die anzubringende graphische Information beziehen. Bspw. kann die Lasergraviereinrichtung Fertigungsdaten, Schargennummern und dgl. erhalten. Außerdem kann das von der Bildaufnahmeeinrichtung aufgenommene Bild oder die von einem Bediener eingegebene Information von der Verarbeitungseinrichtung über die Interfaceeinrichtung nach außen weitergegeben werden, um bspw. Reifendaten oder sonstige Daten zu registrieren.

Weitere Einzelheiten vorteilhafter Ausführungsformen der Erfindung sind Gegenstand von Unteransprüchen oder ergeben sich aus der Zeichnung und/oder der zugehörigen Beschreibung.

In der Zeichnung ist ein Ausführungsbeispiel der Erfindung veranschaulicht. Es zeigen:
Fig. 1 eine Lasergraviereinrichtung zur Reifenbeschriftung, in einer schematisierten perspektivischen Gesamtansicht,
Fig. 1a eine abgewandelte Lasergraviereinrichtung zur Reifenbeschriftung in einer Schnittdarstellung,
Fig. 2 die Lasergraviereinrichtung nach Figur 1, in einer schematisierten Prinzipdarstellung in Funktionsblöcken,
Fig. 3 eine Darstellung auf der Anzeigeeinrichtung der Lasergraviereinrichtung nach den Figuren 1 und 2, in schematisierter Darstellung, und
Fig. 4 die Lasergraviereinrichtung nach Figur 2, als Blockschaltbild.

### Beschreibung:

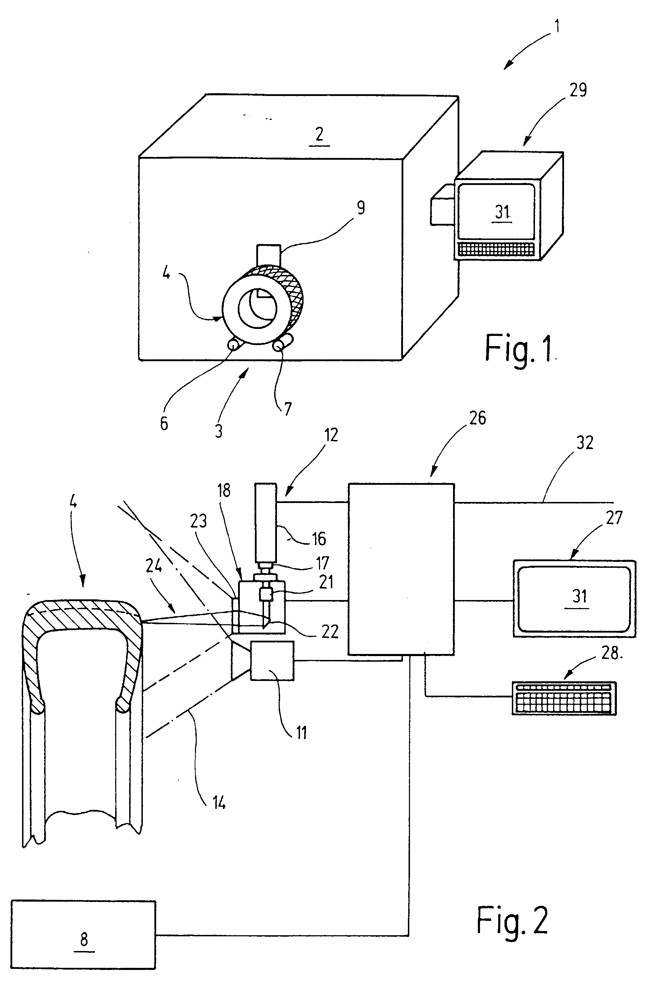

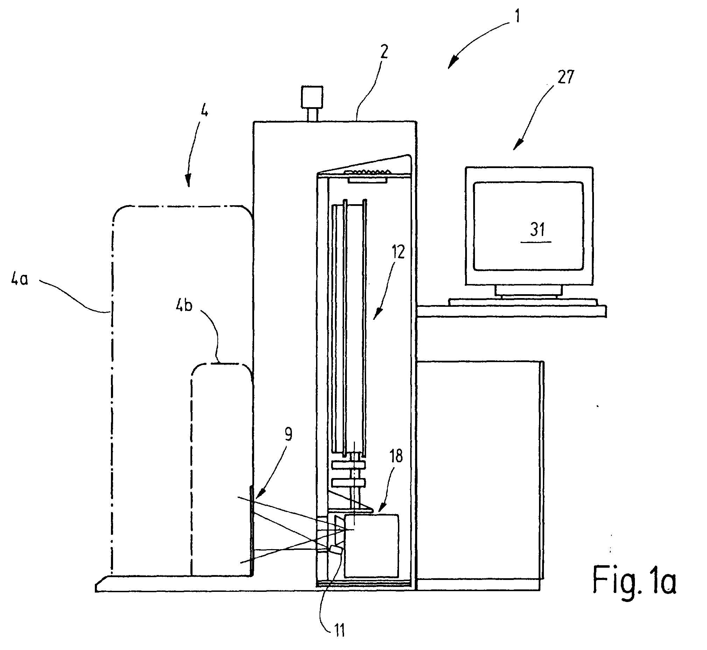

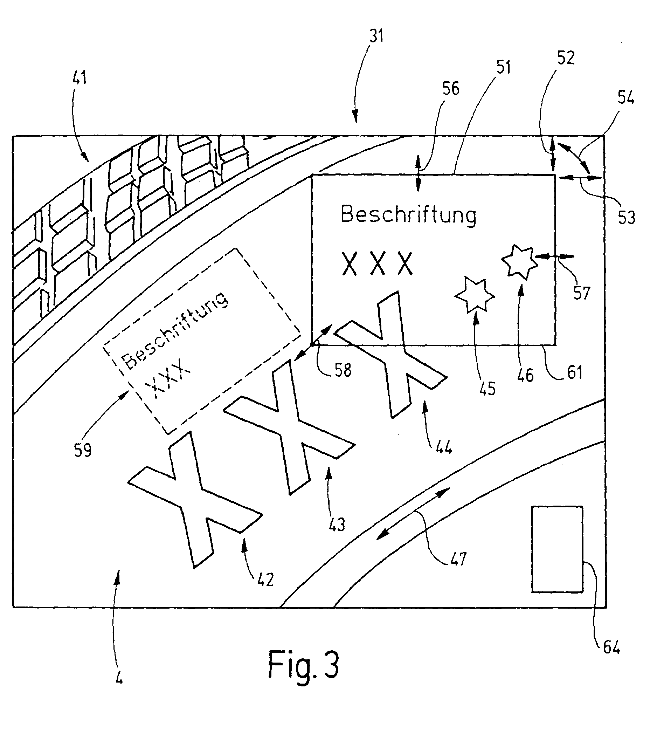

In Figur 1 ist eine Reifenbeschriftungseinrichtung 1 veranschaulicht, die als Lasergraviereinrichtung ausgebildet ist. Die Reifenbeschriftungseinrichtung weist ein einen Innenraum umschließendes Gehäuse 2 auf, an dessen Vorderseite mittels einer geeigneten Aufnahme 3 ein Reifen 4 gelagert ist. Die Aufnahme 3 wird im vorliegenden Beispiel durch zwei Aufnahmewalzen 6, 7 gebildet, die im Abstand parallel zueinander angeordnet und drehbar gelagert sind. Bedarfsweise kann eine Walze 6 oder können beide Walzen 7 mit einer Antriebseinrichtung 8 verbunden sein, wie sie in Figur 2 schematisch veranschaulicht ist.

An der Vorderseite des Gehäuses 2 ist in einem Bereich der von der Seitenwand des Reifens 4 überdeckt ist ein Sichtfenster 9 ausgebildet, hinter dem im Innenraum des Gehäuses 2 eine Bildaufnahmeeinrichtung 11 und eine Lasereinheit 12 angeordnet sind. Die Bildaufnahmeeinrichtung 11 ist bspw. eine Kamera, deren Gesichtsfeld oder Erfassungsbereich 14 in Figur 2 mit strichpunktierten Linien angedeutet ist. Im vorliegenden Beispiel füllt das Gesichtsfeld 14 das gesamte Sichtfenster 9 aus. Es ist jedoch auch möglich, das Gesichtsfeld kleiner auszuführen und lieber eine nicht weiter dargestellte Spiegeleinheit oder eine sonstige Ablenkeinheit wie erforderlich zu positionieren. Alternativ kann außerdem die Bildaufnahmeeinrichtung 11 bspw. linear bewegt werden, wozu ein entsprechender, nicht weiter veranschaulichter Antrieb vorgesehen sein kann.

Die Lasereinheit 12 weist einen Laser 16 auf. Dieser ist bspw. als Lowflow-Gaslaster ausgebildet, der als wartungsfrei gelten kann. Der Laser 16 weist eine zur Lasergravur geeignete Leistung auf. Sie kann im Bereich mehrerer 10 Watt liegen.

An dem Laser 16 kann eine Vorsatzoptik 17 vorgesehen sein, die zur Aufweitung des Laserstrahls dienen kann. Außerdem ist vor dem Laser 16 ein Shutter vorgesehen, der den Laserstrahl hell und dunkel steuern kann.

Im Strahlengang des Lasers 16 ist ein sogenannter Scanner 18 angeordnet. Dieser weist zwei Ablenkspiegel 21, 22 auf, die mit nicht weiter dargestellten Antrieben verbunden sind. Die Antriebe sind Drehantriebe, mit denen die Spiegel 21, 22 gezielt um rechtwinklig zueinanderstehende Achsen schwenkbar sind. Der Scanner 18 kann an seinem Strahlausgang eine Optik 23 zur Bildentzerrung und Bündelung des Laserstrahls aufweisen, der als konvergierender Strahl 24 auf den Reifen 4 bzw. dessen Seitenwand trifft. Die Optik 23 ist dabei so ausgelegt, dass der Brennpunkt des konvergierenden Strahls 24 unabhängig von der jeweiligen Schwenkposition des Strahls 24 in einer vorgegebenen Ebene liegt. Sind die zu gravierenden Gegenstände stark gewölbt, kann die Optik 23 auch auf die Wölbung abgestimmt sein, so dass der Brennpunkt der Wölbung folgt.

Sowohl die Lasereinheit 12 als auch die Bildaufnahmeeinrichtung 11 und die Antriebseinrichtung 8 (falls vorhanden) sind mit einer zentralen Verarbeitungseinrichtung 26 verbunden, die deren Betrieb steuert. Die zentrale Verarbeitungseinrichtung 26 ist bspw. ein Mikrorechner, der ein geeignetes Steuerprogramm abarbeitet. Mit der zentralen Verarbeitungseinrichtung 26 kommuniziert eine Monitoreinrichtung 27 und eine Eingabeeinrichtung 28, die bspw. durch eine Tastatur gebildet ist. Die Monitoreinrichtung 27 kann in das Gehäuse 2 der Reifenbeschriftungseinrichtung 1 integriert, oder wie in Figur 1 veranschaulicht in einem gesonderten Gehäuse 29 untergebracht sein. Die Monitoreinrichtung 27 weist einen Schwarz-Weiß- oder Farbbildschirm 31 auf.

In Figur 3 ist ein von dem Monitor 27 wiedergegebenes Bild beispielhaft und symbolisch veranschaulicht. Der Bildinhalt wird durch zwei einander überlagerte Grundbilder gebildet. Das erste den gesamten oder nahezu gesamten Bildschirm ausfüllende Bild ist das von der Bildaufnahmeeinrichtung 11 aufgenommen Abbild des Reifens 4, bzw. ein Ausschnitt aus dem aufgenommenen Abbild. Im vorliegenden Beispiel ist die Seitenwand des Reifens 4 veranschaulicht, wie sie von der Kamera aufgenommen ist. Die Kamera, die bedarfsweise mit einer geeigneten Beleuchtungseinrichtung gekoppelt sein kann, nimmt neben einem Reifenprofil 41 insbesondere auf der Seitenwand des Reitens 4 vorhandene Symbole oder Beschriftungen 42, 43, 44, 45, 46 auf. Eine bspw. manuell über die Eingabeeinrichtung 28 veranlasste Drehung des Reitens 4 durch Betätigung der Antriebseinrichtung 8 oder eine manuelle Drehung des Reitens, wird in Figur 3 durch den Pfeil 47 veranschaulicht. Eine entsprechende Drehung ändert den dargestellten Bildausschnitt.

Die Verarbeitungseinrichtung 26 ist mit einer Schnittstelle 32 versehen, an die eine Datenkommunikation zu einem Zentralrechner oder einer sonstigen Anlage angeschlossen sein kann. Über die Schnittstelle 32 kann die zentrale Verarbeitungseinrichtung 26 Daten erhalten sowie Daten senden. Insbesondere können Beschriftungs- oder Gravurdaten an die zentrale Verarbeitungseinrichtung 26 gesendet werden. Außerdem ist es möglich, dass die Verarbeitungseinrichtung 26 von der Bildaufnahmeeinrichtung 11 aufgenommene Daten über die Schnittstelle 32 nach außen weitergibt.

Auf dem Monitor 31 ist ein gesondertes Anzeigefeld 51 wiedergegebenen, in dem bedarfsweise über die Schnittstelle 32 erhaltene Daten und/oder über die Eingabeeinrichtung 28 eingegebene Daten angezeigt werden. Das Anzeigefeld 51 ist über die Eingabeeinrichtung 28 vertikal und horizontal positionierbar, wie Pfeile 52, 53 andeuten. Außerdem kann es, wie ein weiterer Pfeil 54 veranschaulichen soll, bedarfsweise gedreht werden. Zur weiteren Anpassung an vorgefundene Gegebenheiten kann das Anzeigefeld 51 sowohl in Vertikalrichtung als auch in Horizontalrichtung vergrößert oder verkleinert werden (Pfeile 56, 57), wodurch infolge der separaten Verstellung der jeweiligen Dimension eine Verzerrung stattfinden kann. Eine proportionale Vergrößerung oder Verkleinerung ist ebenfalls möglich, wie ein Pfeil 58 veranschaulicht. Auf diese Weise kann das Anzeigefeld 51 bspw. verkleinert, gedreht und auf die gestrichelt veranschaulichte Position 59 geführt werden.

Die Darstellung des Anzeigefelds 51 ist vorzugsweise so beschaffen, dass die Liveabbildung des Reifens 4 in dem Bereich des Anzeigefelds 51 nicht vollständig abgedeckt wird. Hier vorhandene Strukturen des Reifens 4 (Symbole 44, 45, 46) bleiben sichtbar. Dies wird erreicht, indem der Bildhintergrund in dem Anzeigefeld 51 das Bild des Reifens in diesem Bereich nicht oder wenig verfälscht wiedergibt. Die Verfälschung, bspw. durch Kontrastabschwächung, Helligkeitsverminderung oder Vergrößerung oder eine dünne Umrahmung 61, ist vorzugsweise so beschaffen, dass die Oberflächenstruktur des Reifens 4 erkennbar bleibt.

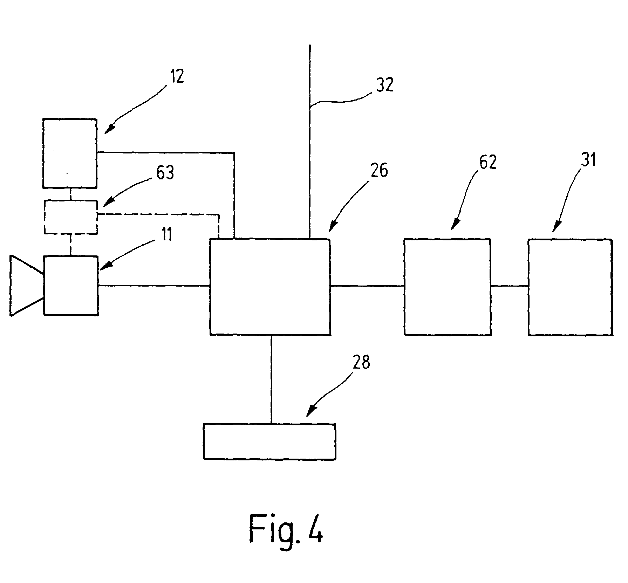

Die gleichzeitige Darstellung des Bilds des Reifens 4 (wenigstens ausschnittsweise) und des Felds 51 wird gemäß Figur 4 dadurch erreicht, dass die Verarbeitungseinrichtung 26 die von der Bildaufnahmeeinrichtung 11 gelieferten Daten mit den Daten die über die Eingabeeinrichtung 28 oder die Schnittstelle 32 erhalten worden sind vereinigt, indem Bildpunkte des Kamerabilds mit einem festgelegten Helligkeits- und oder Farbwert überschrieben werden, sofern ihre Position mit einem Bildpunkt der Beschriftung übereinstimmt. Das soweit gemischte Bild wird in einem geeigneten Bildspeicher 62 abgelegt, der dem Monitor 31 vorgeschaltet ist. Für die übrigen Punkte des Anzeigefelds 31 werden die Helligkeits- und oder Farbwerte des Kamerabilds so geändert, dass die ursprüngliche Bildinformation prinzipiell erhalten bleibt. Bspw. können konstante Werte zu einzelnen Helligkeits- oder Farbwerte addiert oder konstante Faktoren auf diese Werte angewendet werden. Wird das Anzeigefeld 51 durch Eingabe über die Eingabeeinrichtung 28 verschoben, skaliert oder gedreht, werden entsprechend andere Bildpunkte des Kamerabild dementsprechend verändert.

Die Verarbeitungseinrichtung 26 steuert die Lasereinheit 12 so, dass bei Auslösung des Schreib- oder Graviervorgangs über die Eingabeeinrichtung 28 oder die Schnittstelle 32 die Gravur auf dem Reifen 4 relativ genau an der Stelle und so vorgenommen wird, wie sie auf dem Bildschirm 31 dargestellt worden ist. Eine Betätigung der Antriebseinrichtung 8 ist in diesem Zustand gesperrt. Bedarfsweise kann die Antriebseinrichtung 8 auch festgebremst sein, so dass während des Graviervorgangs auch ein manuelles Verdrehen des Reifens 4 unterbunden wird.

Eine abgewandelte Ausführungsform der Reifenbeschriftungseinrichtung 1 ist in Figur 1a veranschaulicht. In dem Gehäuse 2 ist die Lasereinheit 12 angeordnet, die im Wesentlichen mit der Lasereinheit nach der Ausführungsform nach Figur 1 übereinstimmt. Abweichend von der vorstehend beschriebenen Ausführungsform entspricht das Sichtfenster 9 in seiner Größe etwa dem Sichtfeld der Kamera 11 und dem Beschriftungsfeld der Lasereinheit 12 bzw. des Scanners 18. Das Sichtfenster 9 ist so angeordnet, dass es den Bereich der unteren Reifenwand, d.h. die Reifenwand in der Nähe der Aufstandsfläche des Reifens 4 überdeckt. Unabhängig davon, ob ein relativ großer Reifen 4a oder ein eher kleiner Reifen 4b vor dem Sichtfenster 9 plaziert wird ist somit sichergestellt, dass die Seitenwand des Reifens vor dem Sichtfenster befindlich ist. Dadurch können gesonderte Verstellmittel für die Lasereinheit 12, den Scanner 18 oder die Kamera 11, insbesondere für die Vertikalverstellung entfallen.

Die insoweit beschriebene Reifenbeschriftungseinrichtung 1 arbeitet wie folgt:

Soll ein Reifen 4 mit einer Beschriftung versehen werden, wird dieser zunächst auf den Walzen 6, 7 plaziert. Über die Schnittstelle 32 oder die Tastatur 28 werden nun die Eingaben vorgenommen, die erforderlich sind, um die graphische Information auszuwählen oder einzugeben, die auf dem Reifen 4 anzubringen ist. Die graphische Information wird dabei in dem Feld 51 auf dem Monitor 31 wiedergegeben. Zugleich nimmt die Bildaufnahmeeinrichtung 11 das Bild der Seitenwand des Reifens 4 auf und gibt dieses als Hintergrund auf dem Monitor 31 wieder. Sollte die Seitenwand des Reifens 4 nicht im Gesichtsfeld der Bildaufnahmeeinrichtung 11 vorhanden sein, kann diese, wie in Figur 4 gestrichelt angedeutet, mit einer Verstelleinrichtung 63 nachgeführt werden. Ist anstelle der mechanischen Verstellung der Bildaufnahmeeinrichtung 11 eine optische Verstellung oder eine softwaretechnische Verstellung durch Auswahl des Bildausschnitts vorgesehen, wird mit diesen Mitteln das Bild der Seitenwand des Reifens 4 bildfüllend auf den Monitor 31 gebracht. Ist die Seitenwand in dem von dem Monitor 31 angezeigten Bereich schon vollständig mit Markierungen, Darstellung, Profilen und dgl. versehen, wird der Reifen 4 so lange gedreht, bis ein freies und somit gravierbares oder beschriftbares Feld auf dem Monitor 31 erscheint. Dies kann durch manuelles Drehen des Reifens 4 oder durch entsprechende Eingabe an der Tastatur 28 erfolgen. Bspw. können die Pfeiltasten unter Umständen in Verbindung mit anderen Tasten, einem Trackball, einer Mouse oder einem Joystick dazu dienen. Zur Erleichterung der Kommunikation mit Mouse oder Joystick bzw. Trackball kann ein Kommunikationsfeld 64 dienen, das bedarfsweise in das Bild des Monitors 31 einblendbar und dort frei positionierbar ist.

Ist ein solcher Bereich des Reifens 4 auf dem Monitor 31 zur Anzeige gebracht der einen beschriftbaren freien Bereich enthält, kann nun das Anzeigefeld 51 dorthin verschoben und in die entsprechende Größe gebracht werden, indem es gedehnt, gestaucht oder skaliert und verschoben bzw. gedreht wird. In dem in Figur 3 veranschaulichten Beispiel wird das Anzeigefeld 51 von der dick dargestellten Position in der es ein Teil eines X und zwei Sterne 45, 46 überdeckt, in die gestrichelt dargestellte Position 59 verschoben. Soll die Gravur nun in dieser Position auf dem Reifen 4 vorgenommen werden, wird der Graviervorgang ausgelöst. Die zentrale Verarbeitungseinrichtung 26 steuert nun die Lasereinheit 12 so an, dass diese die Gravur möglichst genau in dem Feld 59 vornimmt. Der Graviervorgang kann auf dem Monitor beobachten werden. Unter Umständen können Einzelparameter wie Laserleistung, Schreibgeschwindigkeit, Graviertiefe, Strichbreite usw. von Hand nachreguliert werden.

Eine Lasergraviereinrichtung weist eine Bildaufnahmeeinrichtung 11 auf, die ein Teilbild des mit einer Gravur zu versehenden Gegenstandes 4 auf einem Monitor 31 zur Anzeige bringt. Dem Monitorbild wird ein Anzeigefeld überlagert, in dem die auf dem Gegenstand 4 aufzubringende graphische Darstellung anzeigt wird. Das Anzeigefeld ist frei positionierbar und stellt das Schriftfeld dar, das von einer entsprechenden Lasereinheit 12 beschrieben wird, falls diese freigegeben wird. Zur Steuerung dienen Eingabemittel 28. Die Lasergraviereinrichtung ermöglicht ein schnelles und fehlersicheres Beschriften oder Markieren unterschiedlicher Gegenstände in Folge.

## Patentansprüche

1. Lasergraviereinrichtung (1), insbesondere zum Anbringen von Markierungen oder Beschriftungen an lasergravierbaren Gegenständen, insbesondere Reifen (4),
mit einer Lasereinheit (12), die einen Laser (16) und eine Ablenkeinrichtung (18) aufweist, mit der der Laserstrahl über die zu gravierende Fläche führbar ist,
mit einer Verarbeitungseinrichtung (26), die wenigstens temporär über Information verfügt, die die auf den Gegenstand (4) aufzubringende Gravur kennzeichnet,
mit einer Bildaufnahmeeinheit (11), mit der der zu gravierende Gegenstand (4) wenigstens ausschnittsweise erfassbar ist und die an die Verarbeitungseinrichtung (26) angeschlossen ist,
mit einer Anzeigeeinrichtung (27), die an die Verarbeitungseinrichtung (26) angeschlossen ist, wobei die Verarbeitungseinrichtung (26) und die Anzeigeeinrichtung (27) derart zusammenwirken, dass mit der Anzeigeeinrichtung (27) wenigstens ein Ausschnitt des von der Bildaufnahmeeinheit (11) erfassten Bildes sowie die auf den Gegenstand (4) aufzubringende Gravur gleichzeitig anzeigbar ist.

2. Lasergraviereinrichtung nach Anspruch 1, dadurch gekennzeichnet, dass die aufzubringende Gravur in einem Anzeigefeld (51) mit der aufzubringenden Gravur im Vordergrund und mit vorzugsweise durchsichtigem Hintergrund dargestellt ist.

3. Lasergraviereinrichtung nach Anspruch 2, dadurch gekennzeichnet, dass sie eine Eingabeeinrichtung (28) aufweist, die mit der Verarbeitungseinheit (26) verbunden ist und die manuelle Eingaben gestattet.

4. Lasergraviereinrichtung nach Anspruch 3, dadurch gekennzeichnet, dass das Anzeigefeld (51) von über die Eingabeeinrichtung (28) gegebenen Befehlen in Bezug auf das von der Anzeigeeinrichtung (27) zugleich wiedergegebene wenigstens ausschnittsweise Bild des erfassten Gegenstands (4) willkürlich positionierbar ist.

5. Lasergraviereinrichtung nach Anspruch 1, dadurch gekennzeichnet, dass das von der Anzeigeeinrichtung (27) wiedergegebene Bild des Gegenstandes (4) ein Live-Bild ist.

6. Lasergraviereinrichtung nach Anspruch 1, dadurch gekennzeichnet, dass die Verarbeitungseinheit (26) mit der Lasereinheit (12) derart zusammenwirkt, dass die Lasereinheit (12) die Gravur an der Stelle und in der Größe an dem Gegenstand (4) anbringt, die mit der auf der Anzeigeeinrichtung (27) dargestellten Stelle und der dargestellten Größe übereinstimmt.

7. Lasergraviereinrichtung nach Anspruch 1, dadurch gekennzeichnet, dass der Graviervorgang auf der Anzeigeeinrichtung (27) verfolgbar ist.

8. Lasergraviereinrichtung nach Anspruch 1, dadurch gekennzeichnet, dass die Verarbeitungseinrichtung (26) derart ausgebildet ist, dass der von der Anzeigeeinrichtung (27) dargestellte Ausschnitt des zu beschriftenden Gegenstands (4) durch Eingaben über die Eingabeeinrichtung (28) veränderbar ist.

9. Lasergraviereinrichtung nach Anspruch 8, dadurch gekennzeichnet, dass die Bildaufnahmeeinrichtung (11) einen Bilderfassungsbereich aufweist, der alle möglichen Bildausschnitte enthält, wobei die Bildaufnahmeeinrichtung (11) vorzugsweise ruhend gelagert ist.

10. Lasergraviereinrichtung nach Anspruch 8, dadurch gekennzeichnet, dass die Bildaufnahmeeinrichtung (11) an einer von der Verarbeitungseinrichtung (26) gesteuerten Verstelleinrichtung (63) positionierbar ist.

11. Lasergraviereinrichtung nach Anspruch 1, dadurch gekennzeichnet, dass der zu gravierende Gegenstand (4) von einer Aufnahmeeinrichtung (6, 7) getragen ist, die eine Positioniereinheit (8) enthält.

12. Lasergraviereinrichtung nach Anspruch 11, dadurch gekennzeichnet, dass die Aufnahmeeinrichtung (6, 7) zur Aufnahme runder Gegenstände eingerichtet ist und dass die Positioniereinheit (8) dazu eingerichtet ist, die Gegenstände um ihre Mittelachse zu drehen.

13. Lasergraviereinrichtung nach Anspruch 11, dadurch gekennzeichnet, dass die Positioniereinrichtung dazu eingerichtet ist, die aufgenommenen Gegenstände linear zu verschieben.

14. Lasergraviereinrichtung nach Anspruch 1, dadurch gekennzeichnet, dass die Lasereinheit (12) eine Scannereinrichtung (18) aufweist, die mit der Verarbeitungseinrichtung (26) verbunden ist und eine gesteuerte Ablenkung des von dem Laser abgegebenen Strahls in zwei voneinander unabhängigen Richtungen ermöglicht.

15. Lasergraviereinrichtung nach Anspruch 14, dadurch gekennzeichnet, dass die Scannereinrichtung (18) einen Abbildungsbereich aufweist, der deutlich größer ist, als der mit der Gravur zu versehende Bereich.

16. Lasergraviereinrichtung nach Anspruch 1, dadurch gekennzeichnet, dass die Lasereinrichtung (12) mit einer Verstelleinrichtung (63) verbunden ist, mit der die Position der Lasereinrichtung (12) in Bezug auf den Gegenstand einstellbar ist.
